# FASCICULE DE BREVET EUROPEEN

(11) **EP 1 184 559 B1**
(45) Date de publication et mention de la délivrance du brevet: **04.06.2003**
(21) Numéro de dépôt: 01402054.9
(22) Date de dépôt: 30.07.2001
(51) Int. Cl.: F02K 7/18, F02K 9/97

(54) **Système d'obturation pour un orifice d'un conduit, ainsi que statoréacteur et missile comprenant ledit système**
Verschlusssystem für einen Leitungseinlass, sowie Staustrahltriebwerk und Rakete mit einem solchen System
Closure system for the entry of a duct, as well as ramjet and missile comprising said system

(30) Priorité: 28.08.2000 FR 0010983
(43) Date de publication de la demande: 06.03.2002
(73) Titulaire: Aerospatiale Matra Missiles, 75116 Paris (FR)
(72) Inventeur: Demay, Jean-Paul, 94260 Fresnes (FR); Carton, Laurent, 18400 Saint-Florent sur Cher (FR)
(74) Mandataire: Hauer, Bernard

(56) Documents cités:
- GB-A- 2 068 090
- US-A- 3 038 303
- US-A- 3 915 235
- US-A- 4 391 094
- PATENT ABSTRACTS OF JAPAN vol. 015, no. 212 (M-1118), 30 mai 1991 (1991-05-30) -& JP 03 057867 A (TECH RES & DEV INST OF JAPAN DEF AGENCY;OTHERS: 01), 13 mars 1991 (1991-03-13)

## Description

La présente invention concerne un système d'obturation pour un conduit. Bien que non exclusivement, elle concerne plus particulièrement un système d'obturation pour un orifice d'une voie d'introduction d'air dans la chambre de combustion d'un statoréacteur.

On sait que les statoréacteurs sont essentiellement constitués par une chambre de combustion, se terminant par une tuyère d'éjection et à l'intérieur de laquelle sont introduits du combustible liquide ou gazeux (pouvant être obtenu à partir d'un combustible solide) et de l'air de combustion. Cet air de combustion est introduit dans ladite chambre de combustion à travers au moins une voie d'introduction d'air, du type manche à air, qui capte de l'air lorsque ledit statoréacteur (ou le mobile aérien qui le porte) se déplace par rapport à l'air ambiant.

Ainsi, le fonctionnement d'un statoréacteur nécessite la mise en vitesse préalable dudit statoréacteur par rapport audit air ambiant.

Pour ce faire, il est usuel, dans une phase initiale de fonctionnement correspondant à la mise en vitesse dudit statoréacteur, de faire fonctionner celui-ci en fusée, grâce à un propulseur auxiliaire consommable disposé dans ladite chambre de combustion, puis, lorsque ledit statoréacteur a atteint une vitesse prédéterminée et que ledit propulseur auxiliaire est complètement consumé, on passe en fonctionnement statoréacteur proprement dit, avec injection de combustible et d'air de combustion dans la chambre de combustion.

Un tel fonctionnement bimode (mode fusée, puis mode statoréacteur) oblige à prévoir un système d'obturation pour, d'une part, obturer un orifice de ladite voie d'introduction d'air ou manche à air pendant le fonctionnement en fusée, afin d'éviter les fuites, à travers ledit orifice, des gaz engendrés par ledit propulseur auxiliaire consommable et, d'autre part, ouvrir ledit orifice de la voie d'introduction d'air ou manche à air pour le fonctionnement en statoréacteur proprement dit.

Il est connu d'utiliser comme système d'obturation une trappe basculante à ouverture commandée. Toutefois, dans ce cas, on doit prévoir un système de commande particulièrement sophistiqué, évitant toute ouverture intempestive de la trappe, qui pourrait entraîner une mise à feu prématurée dudit propulseur auxiliaire consommable et, par suite, endommager le porteur (avion par exemple) d'un missile équipé dudit statoréacteur. De plus, surtout, cette trappe reste présente à bord du statoréacteur après l'ouverture de la voie d'introduction d'air, ce qui pose bien entendu des problèmes d'encombrement et entraîne la présence d'une masse parasite durant le fonctionnement statoréacteur.

Pour remédier au moins partiellement à ce dernier inconvénient, la demande de brevet français FR-2 474 594 (ou le brevet américain parent US-4 391 094) décrit un système d'obturation pour un orifice d'introduction d'air de combustion dans la chambre de combustion d'un statoréacteur, qui comporte :
- un obturateur ou couvercle en verre qui obture complètement ledit orifice pendant la phase initiale ; et
- un dispositif de destruction, à savoir un dispositif de percussion mécanique, qui détruit cet obturateur en verre, avant le fonctionnement statoréacteur. Lors de cette destruction, l'obturateur en verre est décomposé en petits fragments. Comme l'orifice se trouve en aval de la manche à air et correspond à l'embouchure dans la chambre de combustion, ces fragments sont éjectés à l'extérieur vers l'arriére en passant par la chambre de combustion et la tuyère de poussée.

Par conséquent, l'obturateur est complètement éliminé lors du fonctionnement statoréacteur.

Toutefois, l'utilisation d'un dispositif de percussion mécanique comprenant notamment un piston et un percuteur se terminant en pointe, présente quelques inconvénients.

En effet :
- soit ce dispositif de percussion agit frontalement sur l'obturateur, pour pouvoir facilement le briser.
   Toutefois, pour obtenir une telle action frontale, il est nécessaire d'agencer l'obturateur dans la voie d'introduction d'air de sorte qu'il perturbe alors l'écoulement d'air en fonctionnement statoréacteur ;
- soit le dispositif de percussion est agencé hors de ladite voie d'introduction d'air.
   Toutefois, dans ce cas, il peut uniquement agir latéralement sur l'obturateur, ce qui réduit l'efficacité de ce dispositif de destruction, puisqu'il est bien plus difficile de briser le verre, et surtout de le briser complètement, à partir d'une telle position.

La présente invention a pour objet de remédier à ces inconvénients. Elle concerne un système d'obturation pour un orifice d'un conduit ou voie d'introduction d'air dans la chambre de combustion d'un statoréacteur, qui permet :
- d'ouvrir de façon efficace ledit orifice du conduit à un instant déterminé ; et
- de libérer complètement ledit conduit après l'ouverture de l'orifice.

A cet effet, selon l'invention, ledit système d'obturation du type comportant :
- au moins un obturateur en verre susceptible d'obturer complètement ledit orifice ; et
- au moins un dispositif de destruction susceptible de détruire ledit obturateur en verre de manière à ouvrir ledit orifice, ledit dispositif de destruction comprenant au moins un projectile et un moyen de projection commandable, qui est susceptible de projeter ledit projectile et qui est agencé hors de ladite voie d'introduction d'air tout en étant orienté de manière à pouvoir projeter ledit projectile sur ledit obturateur, ledit obturateur obturant l'orifice d'entrée dans la voie d'introduction d'air,
   est remarquable en ce que ledit obturateur est situé en amont de la voie d'introduction d'air dans le sens d'écoulement de l'air dans ladite voie d'introduction d'air, et en ce que ledit projectile est susceptible de détruire ledit obturateur en verre lorsqu'il est projeté sur ce dernier de façon que, après la destruction de l'obturateur, il est éjecté directement hors du statoréacteur.

Ainsi, grâce à l'invention :
- comme le moyen de projection est agencé hors du conduit, il ne gêne pas l'écoulement d'air après l'ouverture de l'orifice, ledit conduit (voie d'introduction d'air) étant complètement libéré ; et
- comme le moyen de destruction comprend la projection d'un projectile, l'obturateur en verre peut être détruit efficacement et complètement, malgré l'éloignement du moyen de projection et son agencement hors dudit conduit.

De plus, grâce à l'invention, on peut orienter le moyen de projection de sorte que l'impact du projectile sur l'obturateur soit situé à un endroit où la destruction complète est facilitée, notamment à l'endroit le plus fragile de l'obturateur en verre, généralement au centre de ce dernier, ce qui permet d'augmenter et d'optimiser l'efficacité de la destruction.

Par conséquent, dans le cas particulier d'un statoréacteur, tout l'obturateur est éliminé pendant le fonctionnement statoréacteur, ce qui permet de remédier aux inconvénients d'encombrement et de masse parasite précités.

Pour optimiser la précision de l'impact du projectile sur l'obturateur et donc augmenter l'efficacité de la destruction de ce dernier, de façon avantageuse, le système d'obturation conforme à l'invention comporte de plus un guide rectiligne pour guider ledit projectile, guide rectiligne qui est réalisé sous forme d'un canal, dont une extrémité est située en face dudit moyen de projection et dont l'autre extrémité est dirigée vers ledit obturateur.

Dans le cadre de la présente invention, le moyen de projection, le projectile et le verre de l'obturateur peuvent être réalisés selon différents modes de réalisation usuels.

Toutefois, de préférence :
- ledit moyen de projection est un percuteur pyrotechnique ;
- ledit projectile est une balle (pointue) avec une tête conique en métal ; et
- ledit obturateur comprend un verre trempé présentant une contrainte à la rupture d'au moins 190 Mpa.

On notera que le système d'obturation conforme à l'invention peut être mis en oeuvre sur différents types de conduits, dont l'ouverture ou la désobturation doit être réalisée en environnement opérationnel. Cette mise en oeuvre est notamment possible, grâce aux caractéristiques précitées de l'obturateur, puisqu'il est possible de choisir un verre qui est capable de supporter les sollicitations mécaniques, thermiques, vibratoires, et/ou électromagnétiques, susceptibles d'être rencontrées pour ces différents types de conduits.

Dans une application préférée, le système d'obturation conforme à l'invention est appliqué à un statoréacteur et est destiné à obturer un orifice d'une voie d'introduction d'air de combustion dans la chambre de combustion dudit statoréacteur, ledit statoréacteur étant de façon connue susceptible, dans une phase initiale de fonctionnement correspondant à la mise en vitesse dudit statoréacteur, de fonctionner en fusée grâce à un propulseur auxiliaire consommable disposé dans ladite chambre de combustion, puis, lorsque ledit statoréacteur atteint une vitesse prédéterminée, de fonctionner en statoréacteur proprement dit avec injection de combustible et d'air de combustion dans ladite chambre de combustion, et ledit système d'obturation comportant, de façon connue :
- au moins un obturateur en verre susceptible d'obturer complètement ledit orifice, pendant ladite phase initiale de fonctionnement en fusée ; et
- au moins un dispositif de destruction susceptible de détruire ledit obturateur en verre de manière à ouvrir ledit orifice pour le fonctionnement en statoréacteur.

Selon l'invention, ledit statoréacteur est remarquable en ce que ledit système d'obturation présente les caractéristiques précitées, ledit obturateur obturant l'orifice d'entrée dans la voie d'introduction d'air, en amont de cette dernière dans le sens d'écoulement de l'air dans ladite voie d'introduction d'air.

Ainsi, comme le moyen de projection est situé à l'intérieur du statoréacteur, au niveau de la voie d'introduction d'air (manche à air), mais hors de celle-ci, le projectile émis par le moyen de projection est, après la destruction de l'obturateur, éjecté directement hors du statoréacteur et de l'engin volant (missile, ...) muni de ce statoréacteur. Par conséquent, il n'existe aucun risque que ledit projectile endommage ledit statoréacteur ou ledit engin volant.

De plus, comme lors de l'impact sur l'obturateur, le projectile perd beaucoup d'énergie, il n'est plus dangereux, après son éjection hors du statoréacteur, pour des objets (un autre missile par exemple) ou des personnes se trouvant dans l'environnement proche dudit statoréacteur.

De façon avantageuse, ledit obturateur correspond à un prolongement de la paroi externe du statoréacteur au niveau dudit orifice d'entrée.

Ainsi, pendant la phase initiale avant le passage en fonctionnement statoréacteur, comme l'orifice d'entrée dans la voie d'introduction d'air est obturé et comme l'obturateur forme une continuité géométrique avec la paroi externe du statoréacteur, l'air qui glisse le long de cette paroi, glisse également sur la face externe de l'obturateur, sans être perturbé dans son écoulement, ce qui permet notamment de réduire la traînée.

En outre, avantageusement, le système d'obturation conforme à l'invention comporte au moins un moyen de fixation en matière élastique, de préférence en caoutchouc, pour fixer ledit obturateur sur ledit orifice, ce qui permet d'amortir les vibrations (dues notamment à des chocs).

Ainsi, grâce à cette réduction des vibrations, on peut prévoir une épaisseur de lèvre de carénage faible (au niveau dudit orifice) pour la fixation de l'obturateur.

La présente invention concerne également un statoréacteur muni d'un système d'obturation tel que précité, ainsi qu'un missile comprenant un tel statoréacteur.

Les figures du dessin annexé feront bien comprendre comment l'invention peut être réalisée. Sur ces figures, des références identiques désignent des éléments semblables.

La figure 1 montre schématiquement, en coupe longitudinale partielle, un missile équipé d'un statoréacteur de type connu, dont les voies d'introduction d'air sont pourvues d'obturateurs faisant partie de systèmes d'obturation conformes à l'invention.

La figure 2 illustre, en coupe, un mode de réalisation préféré d'un système d'obturation conforme à l'invention.

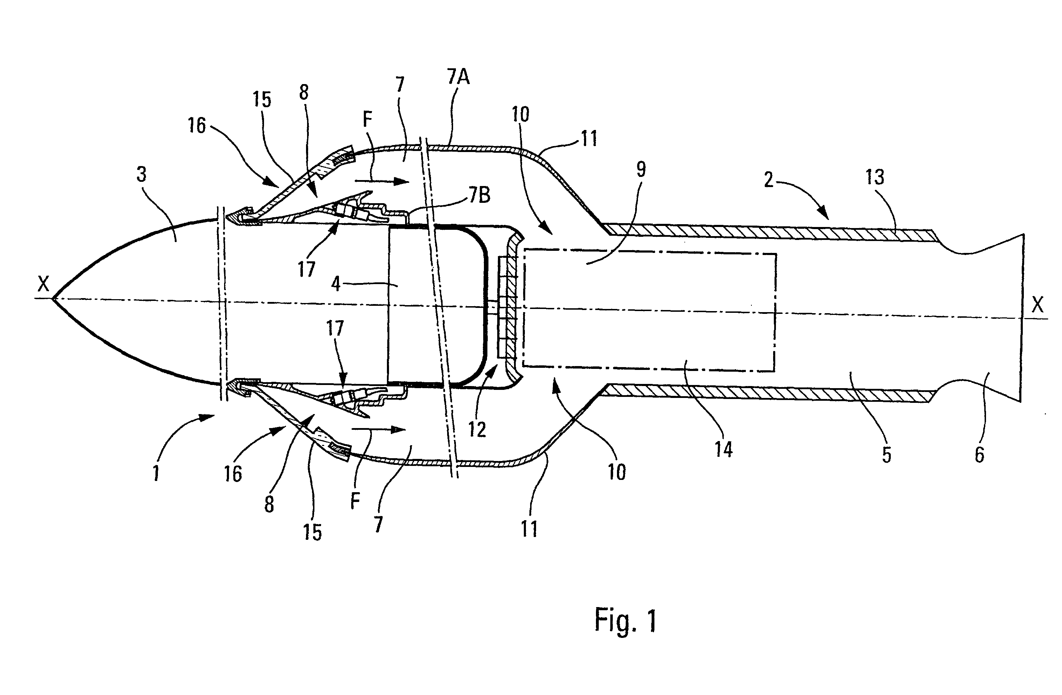

Sur la figure 1, on a représenté schématiquement, à des fins explicatives, un missile 1, d'axe longitudinal X-X, propulsé par un statoréacteur 2 de type connu.

Le missile 1 comporte un corps 3 contenant, entre autres, des appareils et charges usuels (qui ne sont pas représentés car n'étant pas impliqués par l'invention) et un réservoir de combustible 4, destiné à l'alimentation du statoréacteur 2 et fixé à la partie arrière dudit corps 3.

Le statoréacteur 2 comporte une chambre de combustion 5, se terminant à l'arrière par une tuyère d'éjection 6 et reliée, vers l'avant, à une pluralité de voies d'introduction d'air, du type manche à air 7.

Les manches à air 7 sont disposées à la périphérie du corps 3 et sont solidaires de celui-ci. Chacune d'elles, vers l'avant, comporte un orifice 8 d'entrée d'air et, vers l'arrière, débouche dans la partie avant 9 de la chambre de combustion 5 par un orifice 10 de sortie d'air de la manche 7.

Un coude 11 est prévu dans chaque manche à air 7 pour raccorder la partie de celle-ci fixée à la paroi extérieure du corps 3 à l'orifice 10 correspondant à l'entrée de la chambre de combustion 5.

Au voisinage de la partie avant 9 de la chambre de combustion 5 est prévu un dispositif 12 d'injection de combustible. Le dispositif 12 est commandé par un dispositif d'alimentation et de régulation de combustible (non représenté) porté par le corps 3 et relié au réservoir 4.

Un revêtement de protection thermique 13 est prévu sur les parois internes de la chambre de combustion 5.

Le fonctionnement du missile 1 est le suivant.

Initialement, après le largage du missile 1 de son porteur, le statoréacteur 2 n'étant pas en service, le missile 1 est mû par un propulseur auxiliaire consommable 14 (par exemple une charge de poudre) logé à l'intérieur de la chambre de combustion 5.

Quand le propulseur auxiliaire 14 est en fonctionnement, les manches à air 7 sont obturées, par des obturateurs 15 faisant partie de systèmes d'obturation 16 conformes à l'invention et précisés ci-dessous.

A la fin du fonctionnement du propulseur 14, lorsque celui-ci est complètement consumé, lesdits obturateurs 15 sont ouverts et l'air pénétrant (flèches F) dans les manches à air 7 à travers les orifices 8 est amené dans la chambre de combustion 5, à travers les orifices 10.

De plus, également à la fin du fonctionnement du propulseur consommable 14, le dispositif d'alimentation et de régulation alimente le dispositif d'injection 12 en combustible et ce dernier est enflammé. Le statoréacteur entre alors en fonctionnement et prend le relais du propulseur 14 (qui a disparu) pour propulser le missile 1.

On décrit ci-après les caractéristiques conformes à l'invention pour un seul système d'obturation 16, étant entendu que ces caractéristiques existent pour tous les systèmes d'obturation 16 du statoréacteur 2.

Ledit système d'obturation 16 conforme à l'invention est du type comportant :
- ledit obturateur 15 qui est réalisé en un verre cassable précisé ci-dessous et qui obture complètement un orifice de la manche à air 7 ; et
- un dispositif de destruction 17 pour détruire ledit obturateur 15 de manière à ouvrir ledit orifice.

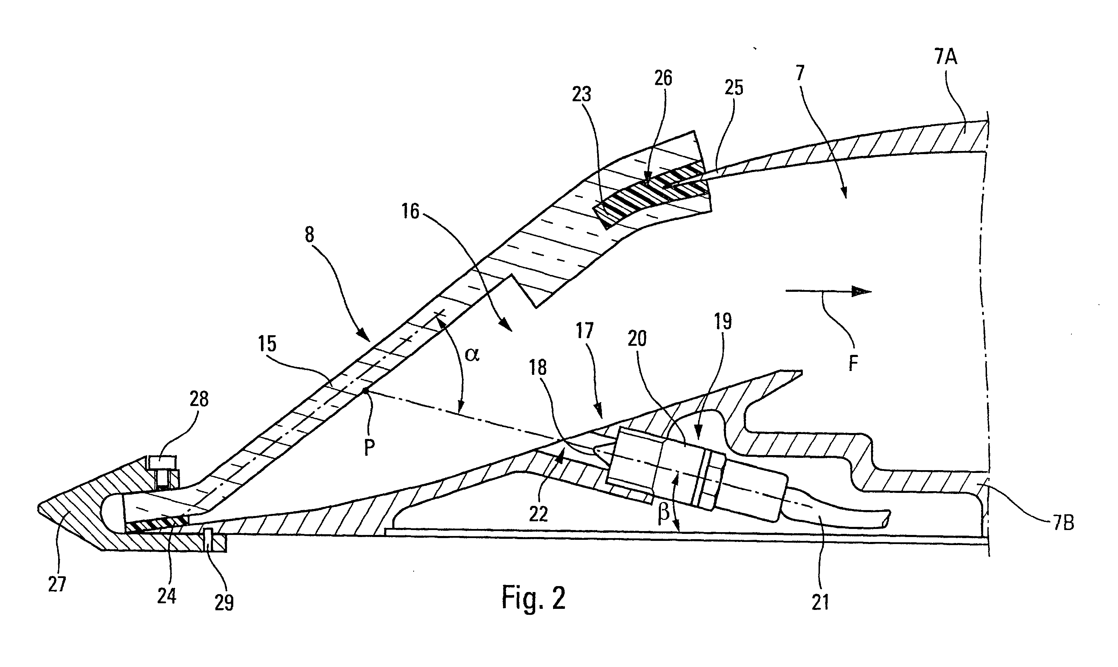

Selon l'invention, ledit système d'obturation 16 est remarquable (voir figure 2) en ce que ledit obturateur 15 obture l'orifice d'entrée 8 dans la manche à air 7 (illustrée par des parois 7A et 7B), qui est situé en amont de cette dernière dans le sens F d'écoulement de l'air dans ladite manche à air 7, et en ce que ledit dispositif de destruction 17 comprend :
- au moins un projectile 18 qui est susceptible de détruire ledit obturateur 15 en verre, lorsqu'il est projeté sur ce dernier ; et
- un moyen de projection 19 commandable, qui est susceptible de projeter ledit projectile 18 et qui est agencé hors de la manche à air 7, tout en étant orienté de manière à pouvoir projeter ledit projectile 18 sur ledit obturateur 15.

Ledit système d'obturation 16 conforme à l'invention présente de nombreux avantages. En particulier :
- comme le moyen de projection 19 est agencé hors de la manche à air 7, il ne gêne pas l'écoulement de l'air de combustion, après la destruction de l'obturateur 15, en fonctionnement statoréacteur. La manche à air 7 est alors complètement libérée ;
- comme la destruction de l'obturateur 15 est réalisée par l'envoi d'un projectile 18, cette destruction peut être réalisée sans contact entre l'obturateur 15 et le moyen de projection 19 qui peut ainsi être éloigné dudit obturateur 15 et de la manche à air 7 ;
- comme l'obturateur 15 est réalisé en verre et grâce à l'efficacité du dispositif de destruction 17, le verre est décomposé en petits fragments qui sont évacués par l'air de combustion et sont éjectés hors du statoréacteur 2, vers l'arrière, via la manche à air 7, la chambre de combustion 5 et la tuyère d'éjection 6. Par conséquent, l'obturateur 15 est complètement éliminé après sa destruction ; et
- comme le moyen de projection 19 est situé vers l'intérieur (du statoréacteur) par rapport à l'obturateur 15 formant une paroi externe (puisqu'il obture l'orifice d'entrée 8), le projectile 18 émis par ledit moyen de projection 19 est, après destruction de l'obturateur 15, éjecté directement hors du statoréacteur 2 et du missile 1.

Par conséquent, il n'existe aucun risque que ledit projectile 18 endommage le statoréacteur 2 ou le missile 1.

De plus, comme lors de l'impact sur l'obturateur 15, le projectile 18 perd beaucoup d'énergie (l'énergie résiduelle après l'impact étant très inférieure à 8 joules dans le mode de réalisation préféré précisé ci-dessous), il n'est plus dangereux, après son éjection hors du statoréacteur 2, pour des objets (un autre missile par exemple) ou des personnes se trouvant dans l'environnement proche dudit statoréacteur 2.

Dans le mode de réalisation préféré représenté sur la figure 2, le moyen 19 qui est destiné à projeter le projectile 18 sur l'obturateur 15 est réalisé sous forme d'un percuteur pyrotechnique usuel 20, dont on a représenté partiellement un cordon 21 permettant de transmettre l'ordre pour commander le déclenchement dudit percuteur 20.

Comme on peut le voir sur la figure 2, le moyen de projection 19 présente un angle β avec l'axe longitudinal de la manche à air et donc avec l'axe longitudinal X-X du statoréacteur 2.

Selon l'invention, on peut choisir un angle β permettant d'optimiser la position du point d'impact P du projectile 18 sur l'obturateur 15.

De préférence, on oriente ledit moyen de projection 19 de sorte que l'impact P soit situé à un endroit où la destruction complète de l'obturateur 15 est la plus facile, c'est-à-dire généralement à proximité du centre dudit obturateur 15.

A titre d'exemple, l'angle β peut être compris entre 10° et 20° et l'angle d'impact α (entre la direction de projection et le plan de l'obturateur 15) peut être compris entre 40° et 55°.

De préférence, le verre de l'obturateur 15 est un verre trempé usuel, présentant une contrainte à la rupture d'au moins 190 Mpa, ainsi que les caractéristiques suivantes :
- épaisseur e = 8 mm
- contrainte à rupture nominale Rm = 250 Mpa
- module de Young E = 72000 Mpa
- densité d = 2,5

De plus, le projectile 18 est, de préférence, une balle métallique pointue (voir figure 2). Il peut aussi s'agir d'une balle sphérique ou présentant toute autre forme.

Le système de destruction 16 comporte de plus un guide rectiligne 22 pour guider ledit projectile 18, guide rectiligne qui est réalisé sous forme d'un canal 22, dont une extrémité est située en face dudit moyen de projection 19 et dont l'autre extrémité est dirigée vers ledit obturateur 15, ce qui permet d'optimiser la précision de l'impact P du projectile 18 sur l'obturateur 15.

De plus, ce guide rectiligne 22 permet de maintenir une vitesse élevée du projectile 18, généralement de près de 350 m/s. Après l'impact, la vitesse est fortement réduite, généralement à près de 25 m/s.

Comme on peut le voir sur les figures 1 et 2, l'obturateur 15 correspond à un prolongement (permettant de créer une continuité géométrique) de la paroi externe 7A de la manche à air 7, au niveau de l'orifice d'entrée 8.

Ainsi, lors du vol, l'écoulement de l'air n'est pas perturbé par une discontinuité géométrique, et peut glisser facilement sur les faces externes de l'obturateur 15 et de la paroi 7A notamment, ce qui permet de réduire la traînée.

Par ailleurs, comme on peut le voir sur la figure 2, le verre de l'obturateur 15 est fixé sur le statoréacteur par l'interposition d'éléments 23 et 24 en matière élastique, par exemple en caoutchouc, ce qui permet d'amortir les vibrations et les chocs.

Grâce à cette réduction des vibrations et des chocs, on peut prévoir une épaisseur de lèvre 25 de carénage très faible.

On notera que l'obturateur 15 est fixé :
- au niveau de la lèvre 25, par l'encastrage de cette lèvre 25 et de l'élément élastique 23 dans un évidement 26 de l'obturateur 15 ; et
- à l'autre extrémité, par une bride 27 qui entoure l'extrémité correspondante de l'obturateur 15 et qui est maintenue par des vis 28 et des pions 29.

Bien entendu, le système d'obturation 16 conforme à l'invention peut être appliqué à d'autres types de conduits, et pas seulement à des manches à air 7.

## Revendications

1. Système d'obturation pour un orifice (8) d'une voie d'introduction d'air (7) d'une chambre de combustion (5) d'un statoréacteur (2), ledit système d'obturation (16) comportant :
- au moins un obturateur (15) en verre susceptible d'obturer complètement ledit orifice (8) ; et
- au moins un dispositif de destruction (17) susceptible de détruire ledit obturateur (15) en verre de manière à ouvrir ledit orifice (8), ledit dispositif de destruction (17) comprenant au moins un projectile (18) et un moyen de projection (19) commandable, qui est susceptible de projeter ledit projectile (18) et qui est agencé hors de ladite voie d'introduction d'air (7) tout en étant orienté de manière à pouvoir projeter ledit projectile sur ledit obturateur (15),
**caractérisé en ce que** ledit obturateur est situé en amont de la voie d'introduction d'air dans le sens (F) d'écoulement de l'air dans ladite voie d'introduction d'air (7), et **en ce que** ledit projectile (18) est susceptible de détruire ledit obturateur (15) en verre lorsqu'il est projeté sur ce dernier de façon que, après la destruction de l'obturateur (15), il est éjecté directement hors du statoréacteur.

2. Système d'obturation selon la revendication 1,
**caractérisé en ce que** ledit moyen de projection (19) est orienté de manière à projeter ledit projectile (18) sensiblement au centre dudit obturateur (15).

3. Système d'obturation selon l'une des revendications 1 et 2,
**caractérisé en ce qu'**il comporte de plus un guide rectiligne (22) pour guider ledit projectile (18), guide rectiligne qui est réalisé sous forme d'un canal (22), dont une extrémité est située en face dudit moyen de projection (19) et dont l'autre extrémité est dirigée vers ledit obturateur (15).

4. Système d'obturation selon l'une quelconque des revendications précédentes,
**caractérisé en ce que** ledit moyen de projection (19) est un percuteur pyrotechnique (20).

5. Système d'obturation selon l'une quelconque des revendications précédentes,
**caractérisé en ce que** ledit projectile (18) est une balle pointue en métal.

6. Système d'obturation selon l'une quelconque des revendications précédentes,
**caractérisé en ce que** ledit obturateur (15) comprend un verre trempé présentant une contrainte à la rupture d'au moins 190 Mpa.

7. Système d'obturation selon l'une quelconque des revendications précédentes,
**caractérisé en ce que** ledit obturateur (15) correspond à un prolongement de la paroi externe (7A) du statoréacteur (2) au niveau dudit orifice d'entrée (8).

8. Système d'obturation selon l'une quelconque des revendications précédentes,
**caractérisé en ce qu'**il comporte au moins un moyen de fixation (23, 24) en matière élastique pour fixer ledit obturateur (15) sur ledit orifice d'entrée (8).

9. Statoréacteur (2) comportant une chambre de combustion (5), ledit statoréacteur (2) étant susceptible, dans une phase initiale de fonctionnement correspondant à la mise en vitesse dudit statoréacteur, de fonctionner en fusée grâce à un propulseur auxiliaire consommable (14) disposé dans ladite chambre de combustion (5), puis, lorsque ledit statoréacteur (2) atteint une vitesse prédéterminée, de fonctionner en statoréacteur proprement dit avec injection de combustible et d'air de combustion dans ladite chambre de combustion (5), ledit statoréacteur (2) étant pourvu d'au moins une voie (7) pour introduire de l'air de combustion à l'intérieur de ladite chambre de combustion (5) et d'un système d'obturation (16) pour un orifice (8) de ladite voie d'introduction d'air de combustion (7), ledit système d'obturation (16) comportant :
- au moins un obturateur (15) en verre susceptible d'obturer complètement ledit orifice (8), pendant ladite phase initiale de fonctionnement en fusée ; et
- au moins un dispositif de destruction (17) susceptible de détruire ledit obturateur (15) en verre de manière à ouvrir ledit orifice (8) pour le fonctionnement en statoréacteur,
**caractérisé en ce que** ledit système d'obturation (16) est du type de celui spécifié sous l'une quelconque des revendications 1 à 8.

10. Missile,
**caractérisé en ce qu'**il comporte un statoréacteur (2) selon la revendication 9.

## Patentansprüche

1. Verschlusssystem für eine Öffnung (8) einer Lufteinlassleitung (7) einer Brennkammer (5) eines Staustrahltriebwerks (2), wobei das genannte Verschlusssystem (16) folgendes umfasst:
- mindestens einen Verschluss (15) aus Glas, der die genannte Öffnung (8) vollständig verschließen kann; und
- mindestens eine Zerstörungsvorrichtung (17), die den genannten Glasverschluss (15) so zerstören kann, dass die genannte Öffnung (8) geöffnet wird, wobei die genannte Zerstörungsvorrichtung (17) mindestens ein Geschoss (18) und ein steuerbares Schleudermittel (19) umfasst, das das genannte Geschoss (18) schleudern kann und außerhalb der genannten Lufteinlassleitung (7) angeordnet und so ausgerichtet ist, dass es das genannte Geschoss auf den genannten Verschluss (15) schleudern kann;
**dadurch gekennzeichnet, dass** sich der genannte Verschluss vor der Lufteinlassleitung in Strömungsrichtung (F) der Luft in der genannten Lufteinlassleitung (7) befindet und dadurch, dass das genannte Geschoss (18) den genannten Glasverschluss (15) zerstören kann, wenn es auf ihn geschleudert wird, so dass es nach Zerstörung des Verschlusses (15) direkt aus dem Staustrahltriebwerk ausgestoßen wird.

2. Verschlusssystem gemäß Anspruch 1,
**dadurch gekennzeichnet, dass** das genannte Schleudermittel (19) so gerichtet ist, dass es das genannte Geschoss (18) im Wesentlichen in die Mitte des genannten Verschlusses (15) schleudert.

3. Verschlusssystem gemäß Anspruch 1 oder 2,
**dadurch gekennzeichnet, dass** es weiterhin eine gerade Führung (22) zum Führen des genannten Geschosses (18) umfasst, wobei diese gerade Führung in Form eines Kanals (22) ausgeführt ist, von dem ein Ende gegenüber dem genannten Schleudermittel (19) liegt und das andere Ende zum genannten Verschluss (15) hin gerichtet ist.

4. Verschlusssystem gemäß einem der vorstehenden Ansprüche,
**dadurch gekennzeichnet, dass** das genannte Schleudermittel (19) ein pyrotechnischer Schlagbolzen (20) ist.

5. Verschlusssystem gemäß einem der vorstehenden Ansprüche,
**dadurch gekennzeichnet, dass** das genannte Geschoss (18) eine spitz zulaufende Metallkugel ist.

6. Verschlusssystem gemäß einem der vorstehenden Ansprüche,
**dadurch gekennzeichnet, dass** der genannte Verschluss (15) ein gehärtetes Glas umfasst, das eine Bruchbeanspruchung von mindestens 190 Mpa besitzt.

7. Verschlusssystem gemäß einem der vorstehenden Ansprüche,
**dadurch gekennzeichnet, dass** der genannte Verschluss (15) einer Verlängerung der Außenwand (7A) des Staustrahltriebwerks (2) an der genannten Eingangsöffnung (8) entspricht.

8. Verschlusssystem gemäß einem der vorstehenden Ansprüche,
**dadurch gekennzeichnet, dass** es mindestens ein Befestigungsmittel (23, 24) aus elastischem Material zur Befestigung des genannten Verschlusses (15) an der genannten Eingangsöffnung (8) umfasst.

9. Staustrahltriebwerk (2), das eine Brennkammer (5) umfasst, wobei das genannte Staustrahltriebwerk (2) in einer Betriebsanfangsphase, die dem Hochfahren des genannten Staustrahltriebwerks entspricht, durch ein sich aufbrauchendes, in der genannten Brennkammer (5) angeordnetes Hilfstriebwerk (14) als Rakete funktionieren kann, dann, wenn das genannte Staustrahltriebwerk (2) eine vorbestimmte Drehzahl erreicht hat, zum eigentlichen Staustrahltriebwerksbetrieb mit Einspritzung von Kraftstoff und Verbrennungsluft in die genannte Brennkammer (5) übergehen kann, wobei das genannte Staustrahltriebwerk (2) mindestens mit einer Leitung (7) zum Einleiten von Verbrennungsluft in die genannte Brennkammer (5) und einem Verschlusssystem (16) für eine Öffnung (8) der genannten Verbrennungslufteinlassleitung (7) versehen ist, wobei das genannte Verschlusssystem (16) folgendes umfasst:
- mindestens einen Glasverschluss (15), der die genannte Öffnung (8) während der Betriebsanfangsphase als Rakete verschließen kann; und
- mindestens eine Zerstörungsvorrichtung (17), die den genannten Glasverschluss (15) so zerstören kann, dass die genannte Öffnung (8) für die Betriebsweise als Staustrahltriebwerk geöffnet wird,
**dadurch gekennzeichnet, dass** das genannte Verschlusssystem (16) von der in einem der Ansprüche 1 bis 8 beschriebenen Art ist.

10. Flugkörper,
**dadurch gekennzeichnet, dass** er ein Staustrahltriebwerk (2) gemäß Anspruch 9 umfasst.

## Claims

1. Blanking-cap system for an orifice (8) of an air-intake duct (7) of a combustion chamber (5) of a ramjet (2), the said blanking-cap system (16) including:
- at least one glass blanking cap (15) capable of completely blanking off the said orifice (8); and
- at least one destruction device (17) capable of destroying the said glass blanking cap (15), so as to open the said orifice (8), the said destruction device (17) comprising at least one projectile (18) and a controllable projection means (19), which is capable of projecting the said projectile (18) and which is arranged outside the said air-intake duct (7) while being oriented in such a way as to be able to project the said projectile onto the said blanking cap (15),
**characterized in that** the said blanking cap is situated upstream of the air-intake duct in the direction (F) of flow of the air into the said air-intake duct (7), and **in that** the said projectile (18) is capable of destroying the said glass blanking cap (15) when it is projected onto it, such that, after the destruction of the blanking cap (15), it is ejected directly out of the ramjet.

2. Blanking-cap system according to Claim 1,
**characterized in that** the said projection means (19) is oriented in such a way as to project the said projectile (18) substantially at the centre of the said blanking cap (15).

3. Blanking-cap system according to either of Claims 1 and 2,
**characterized in that** it further includes a straight-line guide (22) for guiding the said projectile (18), the straight-line guide being produced in the form of a channel (22), one end of which is situated facing the said projection means (19) and the other end of which is directed towards the said blanking cap (15).

4. Blanking-cap system according to any one of the preceding claims,
**characterized in that** the said projection means (19) is a pyrotechnic striker (20).

5. Blanking-cap system according to any one of the preceding claims,
**characterized in that** the said projectile (18) is a pointed metal bullet.

6. Blanking-cap system according to any one of the preceding claims,
**characterized in that** the said blanking cap (15) comprises toughened glass exhibiting a rupture stress of at least 190 Mpa.

7. Blanking-cap system according to any one of the preceding claims,
**characterized in that** the said blanking cap (15) corresponds to an extension of the outer wall (7A) of the ramjet (2) in the region of the said inlet orifice (8) .

8. Blanking-cap system according to any one of the preceding claims,
**characterized in that** it includes at least one fixing means (23, 24) made of elastic material for fixing the said blanking cap (15) onto the said inlet orifice (8).

9. Ramjet (2) including a combustion chamber (5), the said ramjet (2) being capable, in an initial phase of operation corresponding to the speeding-up of the said ramjet, of operating as a rocket by virtue of a consumable auxiliary thruster (14) arranged in the said combustion chamber (5), then, when the said ramjet (2) reaches a predetermined speed, of operating as a ramjet proper with injection of fuel and of combustion air into the said combustion chamber (5), the said ramjet (2) being provided with at least one duct (7) for taking combustion air into the said combustion chamber (5), and a blanking-cap system (16) for an orifice (8) of the said combustion-air intake duct (7), the said blanking-cap system (16) including:
- at least one glass blanking cap (15) capable of completely blanking off the said orifice (8), during the said initial phase of operation as a rocket; and
- at least one destruction device (17) capable of destroying the said glass blanking cap (15) so as to open the said orifice (8) for operation as a ramjet,
**characterized in that** the said blanking-cap system (16) is of the type specified under any one of Claims 1 to 8.

10. Missile,
**characterized in that** it includes a ramjet (2) according to Claim 9.
